(19) Europäisches Patentamt / European Patent Office / Office européen des brevets

(11) **EP 2 566 324 B2**

(12) **NEW EUROPEAN PATENT SPECIFICATION**
After opposition procedure

(45) Date of publication and mention
of the opposition decision:
**28.08.2019  Bulletin 2019/35**

(45) Mention of the grant of the patent:
**25.01.2017  Bulletin 2017/04**

(21) Application number: **11718876.3**

(22) Date of filing: **03.05.2011**

(51) Int Cl.:
*A01N 37/40* (2006.01)          *A01N 57/20* (2006.01)
*A01P 13/00* (2006.01)

(86) International application number:
**PCT/US2011/034899**

(87) International publication number:
**WO 2011/140020 (10.11.2011 Gazette 2011/45)**

(54) **Method of controlling undesirable vegetation with a composition comprising a dicamba salt and a glyphosate salt**

Verfahren zur Bekämpfung unerwünschter Vegetation mit einer Zusammensetzung enthaltend ein Dicamba Salz und ein Glyphosat Salz

Méthode de contrôl de vegetation indésirable avec une composition comprenant un sel de dicamba et un sel de glyphosate

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.05.2010  US 331045 P**

(43) Date of publication of application:
**13.03.2013  Bulletin 2013/11**

(73) Proprietor: **Dow AgroSciences LLC**
**Indianapolis, IN 46268 (US)**

(72) Inventors:
• **SATCHIVI, Norbert**
  **Westfield**
  **IN 46074 (US)**
• **WRIGHT, Terry**
  **Carmel**
  **IN 46074 (US)**

(74) Representative: **f & e patent**
**Fleischer, Engels & Partner mbB, Patentanwälte**
**Braunsberger Feld 29**
**51429 Bergisch Gladbach (DE)**

(56) References cited:
WO-A1-2005/087007    WO-A1-2011/008281
WO-A2-2008/048964    WO-A2-2008/051633
WO-A2-2010/149732    WO-A2-2010/151622
US-A1- 2006 270 556    US-A1- 2008 119 361
US-A1- 2009 105 077

• FLINT J L ET AL: "Effects of Glyphosate Combinations with 2,4-D or Dicamba on Field Bindweed (Convolvulus arvensis)", 1 January 1989 (1989-01-01), WEED SCIENCE, WEED SCIENCE SOCIETY OF AMERICA, CHAMPAIGN, IL, US, PAGE(S) 12 - 18, XP009108097, ISSN: 0043-1745 abstract Results and Discussion; table 1
• "FALLOW MASTER® BroadSpectrum Herbicide", MONSANTO COMPANY MATERIAL SAFETY DATA SHEET COMMERCIAL PRODUCT, 31 January 2003 (2003-01-31), pages 1-11, XP055430465,
• Label Amendment Fallow Master® Herbicide, US Environmental Protection Agency, 1994
• LABEL CLARITY®, 2008

EP 2 566 324 B2

**EP 2 566 324 B2**

**Description**

This invention concerns a method of controlling undesirable vegetation which comprises contacting the vegetation or the locus thereof with or applying to the soil to prevent the emergence of vegetation an herbicidally effective amount of an herbicidal mixture comprising a dicamba salt and a glyphosate salt, wherein the undesirable vegetation comprises glyphosate resistant common lambsquarters, and the weight ratio of the dicamba salt to the glyphosate salt is between 2:1 and 1:2 on an acid equivalent basis.

The protection of crops from weeds and other vegetation which inhibit crop growth is a constantly recurring problem in agriculture. To help combat this problem, researchers in the field of synthetic chemistry have produced an extensive variety of chemicals and chemical formulations effective in the control of such unwanted growth. Chemical herbicides of many types have been disclosed in the literature and a large number are in commercial use.

In some cases, herbicidal active ingredients have been shown to be more effective in combination than when applied individually and this is referred to as "synergism." As described in the Herbicide Handbook of the Weed Science Society of America, Ninth Edition, 2007, p. 429, "'synergism' [is] an interaction of two or more factors such that the effect when combined is greater than the predicted effect based on the response of each factor applied separately." The present invention is based on the discovery that substituted phenoxy alkanoic acid derivatives and glyphosate derivatives, already known individually for their herbicidal efficacy, display a synergistic effect when applied in combination.

For example, dicamba, 3,6-dichloro-2-methoxybenzoic acid, is a selective systemic herbicide used to control annual and perennial broad-leaved weeds in various crops as well as in non-crop land. It is commercially available, for example, as a dimethylammonium salt such as Banvel™ herbicide from Arysta LifeScience and as a diglycolamine salt such as Clarity™ herbicide from BASF.

Glyphosate, *N*-(phosphonomethyl)glycine, is a non-selective systemic herbicide used to control annual and perennial grasses and broad-leaved weeds, particularly in crops that have been genetically modified to be tolerant of glyphosate. It is commercially available, for example, as an isopropylammonium salt such as Glyphomax Plus™ herbicide from Dow AgroSciences, as a potassium salt such as Roundup PowerMax™ herbicide from Monsanto, as a diammonium salt such as Touchdown™ herbicide from Syngenta, or as a dimethylammonium salt such as Durango™ herbicide from Dow AgroSciences.

US 2008/0119361 A1 relates to methods for weed control, including the control of glyphosate resistant weeds, using dicamba and related herbicides, among others also mixtures of dicamba and glyphosate.

The present invention concerns a method of controlling undesirable vegetation which comprises contacting the vegetation or the locus thereof with or applying to the soil to prevent the emergence of vegetation an herbicidally effective amount of an herbicidal mixture comprising a dicamba salt and a glyphosate salt, wherein the undesirable vegetation comprises glyphosate resistant common lambsquarters, and the weight ratio of the dicamba salt to the glyphosate salt is between 2:1 and 1:2 on an acid equivalent basis. A synergistic effect is observed when applying the mixture comprising the dicamba salt and the glyphosate salt according to said method.

The species spectra of the compounds of the synergistic mixture, i.e., the weed species which the respective compounds control, are broad and highly complementary. While glyphosate is a non-selective herbicide, resistance to glyphosate by several weed species, for example, horseweed (*Conyza Canadensis,* ERICA), giant and common ragweeds (*Ambrosia trifida,* AMBTR and *Ambrosia artemisiifolia*), and various amaranths (*Amaranthus* spp., AMASS) have been well documented. Additionally, certain common lambsquarters *(Chenopodium album L.,* CHEAL) biotypes are difficult to control (resistant) with glyphosate. Recent reports of dicamba-resistant CHEAL have been reported. The synergistic mixture of dicamba and glyphosate is particularly effective at controlling these glyphosate- and dicamba-resistant weeds and maintaining the utility of these herbicides. Other weeds which the mixture of dicamba and glyphosate synergistically control include spiderwort (*Commelina benghalensis;* COMBE).

The term herbicide is used herein to mean an active ingredient that kills, controls or otherwise adversely modifies the growth of plants. An herbicidally effective or vegetation controlling amount is an amount of active ingredient which causes an adversely modifying effect and includes deviations from natural development, killing, regulation, desiccation, retardation, and the like. The terms plants and vegetation include germinating seeds, emerging seedlings and established vegetation.

Herbicidal activity is exhibited by the compounds of the synergistic mixture when they are applied directly to the plant or to the locus of the plant at any stage of growth or before planting or emergence. The effect observed depends upon the plant species to be controlled, the stage of growth of the plant, the application parameters of dilution and spray drop size, the particle size of solid components, the environmental conditions at the time of use, the specific compound employed, the specific adjuvants and carriers employed, the soil type, and the like, as well as the amount of chemical applied. These and other factors can be adjusted as is known in the art to promote non-selective or selective herbicidal action. Generally, it is preferred to apply the composition postemergence to relatively immature undesirable vegetation to achieve the maximum control of weeds.

Dicamba derivatives and glyphosate derivatives mean the agriculturally acceptable salts. Suitable salts include those derived from alkali or alkaline earth metals and those derived from ammonia and amines. Preferred cations include sodium, potassium, magnesium, and aminium cations of the formula:

$$R_1R_2R_3 R_4N^+$$

wherein $R_1$, $R_2$, $R_3$ and $R_4$ each, independently represents hydrogen or $C_1$-$C_{12}$ alkyl, $C_3$-$C_{12}$ alkenyl or $C_3$-$C_{12}$ alkynyl, each of which is optionally substituted by one or more hydroxy, $C_1$-$C_4$ alkoxy, $C_1$-$C_4$ alkylthio or phenyl groups, provided that $R_1$, $R_2$, $R_3$ and $R_4$ are sterically compatible. Preferred amine salts are those derived from ammonia, methylamine, dimethylamine, trimethylamine, isopropylamine, monoethanolamine, diethanolamine, triethanolamine, diglyclolamine, triisopropanolamine, choline, 2-methylthiopropylamine, bisallylamine, 2-butoxyethylamine, morpholine, cyclododecylamine, or benzylamine. Amine salts are often preferred because they are water-soluble and lend themselves to the preparation of desirable aqueous based herbicidal compositions.

In the method of this invention, the weight ratio on an acid equivalent basis of the dicamba component to glyphosate component at which the herbicidal effect is synergistic lies within the range of between 2:1 and 1:2 being preferred and a weight ratio of 1:1 being especially preferred.

The rate at which the synergistic composition is applied will depend upon the particular type of weed to be controlled, the degree of control required, and the timing and method of application. In general, the composition of the invention can be applied at an application rate of between 100 grams of acid equivalents per hectare (g ae/ha) and 2000 g ae/ha based on the total amount of active ingredients in the composition. An application rate of between 200 g ae/ha and 1000 g ae/ha is preferred. In an especially preferred embodiment of the invention, the dicamba component is applied at a rate of between 35 g ae/ha and 560 g ae/ha and the glyphosate component is applied at a rate of between 35 g ae/ha and 1120 g ae/ha.

The components of the synergistic mixture can be applied either separately or as part of a multipart herbicidal system.

The synergistic mixture can be applied in conjunction with one or more other herbicides to control a wider variety of undesirable vegetation. When used in conjunction with other herbicides, the composition can be formulated with the other herbicide or herbicides, tank mixed with the other herbicide or herbicides or applied sequentially with the other herbicide or herbicides. Some of the herbicides that can be employed in conjunction with the synergistic composition include: 4-CPA; 4-CPB; 4-CPP; 2,4-D; 3,4-DA; 2,4-DB; 3,4-DB; 2,4-DEB; 2,4-DEP; 3,4-DP; 2,3,6-TBA; 2,4,5-T; 2,4,5-TB; acetochlor, acifluorfen, aclonifen, acrolein, alachlor, allidochlor, alloxydim, allyl alcohol, alorac, ametridione, ametryn, amibuzin, amicarbazone, amidosulfuron, aminocyclopyrachlor, aminopyralid, amiprofos-methyl, amitrole, ammonium sulfamate, anilofos, anisuron, asulam, ataton, atrazine, azafenidin, azimsulfuron, aziprotryne, barban, BCPC, beflubutamid, benazolin, bencarbazone, benfluralin, benfuresate, bensulfuron, bensulide, bentazone, benzadox, benzfendizone, benzipram, benzobicyclon, benzofenap, benzofluor, benzoylprop, benzthiazuron, bicyclopyrone, bifenox, bilanafos, bispyribac, borax, bromacil, bromobonil, bromobutide, bromofenoxim, bromoxynil, brompyrazon, butachlor, butafenacil, butamifos, butenachlor, buthidazole, buthiuron, butralin, butroxydim, buturon, butylate, cacodylic acid, cafenstrole, calcium chlorate, calcium cyanamide, cambendichlor, carbasulam, carbetamide, carboxazole chlorprocarb, carfentrazone, CDEA, CEPC, chlomethoxyfen, chloramben, chloranocryl, chlorazifop, chlorazine, chlorbromuron, chlorbufam, chloreturon, chlorfenac, chlorfenprop, chlorflurazole, chlorflurenol, chloridazon, chlorimuron, chlornitrofen, chloropon, chlorotoluron, chloroxuron, chloroxynil, chlorpropham, chlorsulfuron, chlorthal, chlorthiamid, cinidon-ethyl, cinmethylin, cinosulfuron, cisanilide, clethodim, cliodinate, clodinafop, clofop, clomazone, clomeprop, cloprop, cloproxydim, clopyralid, cloransulam, CMA, copper sulfate, CPMF, CPPC, credazine, cresol, cumyluron, cyanatryn, cyanazine, cycloate, cyclosulfamuron, cycloxydim, cycluron, cyhalofop, cyperquat, cyprazine, cyprazole, cypromid, daimuron, dalapon, dazomet, delachlor, desmedipham, desmetryn, di-allate, dichlobenil, dichloralurea, dichlormate, dichlorprop, dichlorprop-P, diclofop, diclosulam, diethamquat, diethatyl, difenopenten, difenoxuron, difenzoquat, diflufenican, diflufenzopyr, dimefuron, dimepiperate, dimethachlor, dimethametryn, dimethenamid, dimethenamid-P, dimexano, dimidazon, dinitramine, dinofenate, dinoprop, dinosam, dinoseb, dinoterb, diphenamid, dipropetryn, diquat, disul, dithiopyr, diuron, DMPA, DNOC, DSMA, EBEP, eglinazine, endothal, epronaz, EPTC, erbon, esprocarb, ethalfluralin, ethametsulfuron, ethidimuron, ethiolate, ethofumesate, ethoxyfen, ethoxysulfuron, etinofen, etnipromid, etobenzanid, EXD, fenasulam, fenoprop, fenoxaprop, fenoxaprop-P, fenoxasulfone, fenteracol, fenthiaprop, fentrazamide, fenuron, ferrous sulfate, flamprop, flamprop-M, flazasulfuron, florasulam, fluazifop, fluazifop-P, fluazolate, flucarbazone, flucetosulfuron, fluchloralin, flufenacet, flufenican, flufenpyr, flumetsulam, flumezin, flumiclorac, flumioxazin, flumipropyn, fluometuron, fluorodifen, fluoroglycofen, fluoromidine, fluoronitrofen, fluothiuron, flupoxam, flupropacil, flupropanate, flupyrsulfuron, fluridone, flurochloridone, fluroxypyr, flurtamone, fluthiacet, fomesafen, foramsulfuron, fosamine, furyloxyfen, glufosinate, glufosinate-P, halosafen, halosulfuron, haloxydine, haloxyfop, haloxyfop-P, hexachloroacetone, hexaflurate, hexazinone, imazamethabenz, imazamox, imazapic, imazapyr, imazaquin, imazethapyr, imazosulfuron, indanofan, indaziflam, iodobonil, iodomethane, iodosulfuron, ioxynil, ipazine, ipfencarbazone, iprymidam, isocarbamid, isocil, isomethiozin, isonoruron, isopolinate, isopropalin, isoproturon, isouron, isoxaben, isoxachlortole, isoxaflutole, isoxapyrifop, karbutilate, ketospiradox, lactofen, lenacil, linuron, MAA, MAMA, MCPA, MCPA-thioethyl, MCPB, mecoprop, mecoprop-P, medinoterb, mefenacet, mefluidide, mesoprazine, mesosulfuron, mesotrione, metam, metamifop, metamitron, metazachlor, metazosulfuron, metflurazon, methabenzthiazuron, methalpropalin, methazole, methiobencarb, methiozolin, methiuron, methometon, methoprotryne, methyl bromide, methyl isothiocyanate, methyldymron, metobenzuron, metobromuron, metolachlor, metosulam, metoxuron, metribuzin, metsulfuron, molinate, monalide, monisouron, monochloroacetic acid, monolinuron, monuron, morfamquat, MSMA, naproanilide, napropamide, naptalam, neburon, nicosulfuron, nipyraclofen, nitralin, nitrofen, nitrofluorfen, norflurazon, noruron, OCH, orbencarb, *ortho*-dichlorobenzene, orthosulfamuron, oryzalin, oxadiargyl, oxadiazon, oxapyrazon, oxasulfuron, oxaziclomefone, oxyfluorfen, parafluron, paraquat, pebulate, pelargonic acid, pendimethalin, penoxsulam, pentachlorophenol, pentanochlor, pentoxazone, perfluidone, pethoxamid, phenisopham, phenmedipham, phenmedipham-ethyl, phenobenzuron, phenylmercury acetate, picloram, picolinafen, pinoxaden, piperophos, potassium arsenite, potassium azide, potassium cyanate, pretilachlor, primisulfuron, procyazine, prodiamine, profluazol, profluralin, profoxydim, proglinazine, prometon, prometryn, propachlor, propanil, propaquizafop, propazine, propham, propisochlor, propoxycarbazone, propyrisulfuron, propyzamide, prosulfalin, prosulfocarb, prosulfuron, proxan, prynachlor, pydanon, pyraclonil, pyraflufen, pyrasulfotole, pyrazolynate, pyrazosulfuron, pyrazoxyfen, pyribenzoxim, pyributicarb, pyriclor, pyridafol, pyridate, pyriftalid, pyriminobac, pyrimisulfan, pyrithiobac, pyroxasulfone, pyroxsulam, quinclorac, quinmerac, quinoclamine, quinonamid, quizalofop, quizalofop-P, rhodethanil, rimsulfuron, saflufenacil, S-metolachlor, sebuthylazine, secbumeton, sethoxydim, siduron, simazine, simeton, simetryn, SMA, sodium arsenite, sodium azide, sodium chlorate, sulcotrione, sulfallate, sulfentrazone, sulfometuron, sulfosulfuron, sulfuric acid, sulglycapin, swep, TCA, tebutam, tebuthiuron, tefuryltrione, tembotrione, tepraloxydim, terbacil, terbucarb, terbuchlor, terbumeton, terbuthylazine, terbutryn, tetrafluron, thenylchlor, thiazafluron, thiazopyr, thidiazimin, thidiazuron, thiencarbazone-methyl, thifensulfuron, thiobencarb, tiocarbazil, tioclorim, topramezone, tralkoxydim, tri-allate, triasulfuron, triaziflam, tribenuron, tricamba, triclopyr, tridiphane, trietazine, trifloxysulfuron, trifluralin, triflusulfuron, trifop, trifopsime, trihydroxytriazine, trimeturon, tripropindan, tritac tritosulfuron, vernolate and xylachlor.

The synergistic composition is particularly useful when used on glyphosate-tolerant, glufosinate-tolerant, 2,4-D-tolerant, dicamba-tolerant or imiazolinone-tolerant crops. In the method of the present invention a herbicidal mixture comprising a dicamba salt and a glyphosate salt in a weight ratio between 2:1 and 1:2 on an acid equivalent basis is used to control undesirable vegetation comprising glyphosate resistant common lambsquarters. It is generally preferred to use the synergistic composition in combination with herbicides that are selective for the crop being treated and which complement the spectrum of weeds controlled by these compounds at the application rate employed. It is further generally preferred to apply the synergistic composition and other complementary herbicides at the same time, either as a combination formulation or as a tank mix.

The synergistic composition can generally be employed in combination with known herbicide safeners, such as benoxacor, benthiocarb, brassinolide, cloquintocet (mexyl), cyometrinil, daimuron, dichlormid, dicyclonon, dimepiperate, disulfoton, fenchlorazole-ethyl, fenclorim, flurazole, fluxofenim, furilazole, isoxadifen-ethyl, mefenpyr-diethyl, MG 191, MON 4660, naphthalic anhydride (NA), oxabetrinil, R29148 and *N*-phenylsulfonylbenzoic acid amides, to enhance their selectivity.

In practice, it is preferable to use the synergistic composition in mixtures containing an herbicidally effective amount of the herbicidal components along with at least one agriculturally acceptable adjuvant or carrier. Suitable adjuvants or carriers should not be phytotoxic to valuable crops, particularly at the concentrations employed in applying the compositions for selective weed control in the presence of crops, and should not react chemically with herbicidal components or other composition ingredients. Such mixtures can be designed for application directly to weeds or their locus or can be concentrates or formulations that are normally diluted with additional carriers and adjuvants before application. They can be solids, such as, for example, dusts, granules, water dispersible granules, or wettable powders, or liquids, such as, for example, emulsifiable concentrates, solutions, emulsions or suspensions.

Suitable agricultural adjuvants and carriers that are useful in preparing the herbicidal mixtures of the invention are well known to those skilled in the art.

Liquid carriers that can be employed include water, toluene, xylene, petroleum naphtha, crop oil, acetone, methyl ethyl ketone, cyclohexanone, trichloroethylene, perchloroethylene, ethyl acetate, amyl acetate, butyl acetate, propylene glycol monomethyl ether and diethylene glycol monomethyl ether, methanol, ethanol, isopropanol, amyl alcohol, ethylene glycol, propylene glycol, glycerine, *N*-methylpyrrolidinone, *N-N*-dimethylalkylamides, dimethyl sulfoxide and the like. Water is generally the carrier of choice for the dilution of concentrates.

Suitable solid carriers include talc, pyrophyllite clay, silica, attapulgus clay, kaolin clay, kieselguhr, chalk, diatomaceous earth, lime, calcium carbonate, bentonite clay, Fuller's earth, cotton seed hulls, wheat flour, soybean flour, pumice, wood flour, walnut shell flour, lignin, and the like.

It is usually desirable to incorporate one or more surface-active agents into the compositions. Such surface-active agents are advantageously employed in both solid and liquid compositions, especially those designed to be diluted with carrier before application. The surface-active agents can be anionic, cationic or nonionic in character and can be employed as emulsifying agents, wetting agents, suspending agents, or for other purposes. Typical surface-active agents include salts of alkyl sulfates, such as diethanolammonium lauryl sulfate; alkylarylsulfonate salts, such as calcium dodecylbenzenesulfonate; alkylphenol-alkylene oxide addition products, such as nonylphenol-$C_{18}$ ethoxylate; alcohol-alkylene oxide addition products, such as tridecyl alcohol-$C_{16}$ ethoxylate; soaps, such as sodium stearate; alkylnaphthalene-sulfonate salts, such as sodium dibutylnaphthalenesulfonate; dialkyl esters of sulfosuccinate salts, such as sodium di(2-ethylhexyl) sulfosuccinate; sorbitol esters, such as sorbitol oleate; quaternary amines, such as lauryl trimethylammonium chloride; polyethylene glycol esters of fatty acids, such as polyethylene glycol stearate; block copolymers of ethylene oxide and propylene oxide; and salts of mono and dialkyl phosphate esters.

Other adjuvants commonly used in agricultural compositions include compatibilizing agents, antifoam agents, sequestering agents, neutralizing agents and buffers, corrosion inhibitors, dyes, odorants, spreading agents, penetration aids, sticking agents, dispersing agents, thickening agents, freezing point depressants, antimicrobial agents, and the like. The compositions may also contain other compatible components, for example, other herbicides, plant growth regulants, fungicides, insecticides, and the like and can be formulated with liquid fertilizers or solid, particulate fertilizer carriers such as ammonium nitrate, urea and the like.

The concentration of the active ingredients in the synergistic composition is generally from 0.001 to 98 percent by weight. Concentrations from 0.01 to 90 percent by weight are often employed. In compositions designed to be employed as concentrates, the active ingredients are generally present in a concentration from 5 to 98 weight percent, preferably 10 to 90 weight percent. Such compositions are typically diluted with an inert carrier, such as water, before application. The diluted compositions usually applied to weeds or the locus of weeds generally contain 0.0001 to 1 weight percent active ingredient and preferably contain 0.001 to 0.05 weight percent.

The present compositions can be applied to weeds or their locus by the use of conventional ground or aerial dusters, sprayers, and granule applicators, by addition to irrigation water, and by other conventional means known to those skilled in the art.

The following example illustrate the present invention.

Example

Seeds of the desired test plant species were planted in Sun Gro MetroMix® 306 planting mixture, which typically has a pH of 6.0 to 6.8 and an organic matter content of 30 percent, in plastic pots with a surface area of 103.2 square centimeters ($cm^2$). When required to ensure good germination and healthy plants, a fungicide treatment and/or other chemical or physical treatment was applied. The plants were grown for 7-36 days (d) in a greenhouse with an approximate 16 hour (h) photoperiod which was maintained at 28 °C during the day and 26 °C during the night. Nutrients and water were added on a regular basis and supplemental lighting was provided with overhead metal halide 1000-Watt lamps as necessary. The plants were employed for testing when they reached the second or third true leaf stage.

Treatments consisted of Banvel™ (dicamba dimethylamine salt) and Durango™ herbicide (glyphosate dimethylamine salt) alone and in combinations. An aliquot of Banvel™ (dicamba dimethylamine salt) was placed in 25 milliliter (mL) glass vials and diluted in a volume of water to obtain 1.5 milligrams (mg) active ingredient (ai)/mL concentrated solutions. Subsequent concentrations of Banvel™ (dicamba dimethylamine salt) were obtained by dilution with an equal volume of water. Spray solutions of Durango™ herbicide (glyphosate dimethylamine salt) were prepared following the aforementioned procedure. An aliquot of Durango™ herbicide (glyphosate dimethylamine salt) was placed in 25 milliter (mL) glass vials and mixed in a volume of 100:2 w/w water/ammonium sulfate (AMS) dilution solution to obtain 1.5 milligrams (mg) active ingredient (ai)/mL concentrated solutions.

Compound requirements are based upon a 12 mL application volume at a rate of 187 liters per hectare (L/ha). Spray solutions of the Banvel™ (dicamba dimethylamine salt) and Durango™ herbicide (glyphosate dimethylamine salt) were prepared by adding the concentrated solutions to the appropriate amount of dilution solution to form 12 mL spray solution with active ingredients in combination. Banvel™ (dicamba dimethylamine salt) and Durango™ herbicide (glyphosate dimethylamine salt) alone and in combinations were applied to the foliage of plant material with an overhead Mandel track sprayer equipped with 8002E nozzles calibrated to deliver 187 L/ha over an application area of 0.503 square meters ($m^2$) at a spray height of 18 inches (43 cm) above average plant canopy. Control plants were sprayed in the same manner with the solvent blank.

The treated plants and control plants were placed in a greenhouse as described above and watered by sub-irrigation to prevent wash-off of the test compounds. After 14-21 d, the condition of the test plants as compared with that of the control plants was determined visually and scored on a scale of 0 to 100 percent where 0 corresponds to no injury and 100 corresponds to complete kill.

Colby's equation was used to determine the herbicidal effects expected from the mixtures (Colby, S.R. 1967. Calculation of the synergistic and antagonistic response of herbicide combinations. Weeds 15:20-22.).

The following equation was used to calculate the expected activity of mixtures containing two active ingredients, A and B:

$$\text{Expected} = A + B - (A \times B/100)$$

A = observed efficacy of active ingredient A at the same concentration as used in the mixture;

B = observed efficacy of active ingredient B at the same concentration as used in the mixture.

Table I contains the data for expected and actual herbicidal growth reduction caused by relevant individual herbicides and combinations of these herbicides on optionally glyphosate-resistant common lambsquarters.

TABLE I

| Herbicidal effects of Dicamba and Glyphosate and combinations of the two herbicides on select broadleaf weeds. | | | | | |
|---|---|---|---|---|---|
| **Application Rate (g/ha)** | | CHEAL | | CHEAL GLY-RES | |
| **Dicamba** | **Glyphosate + AMS** | **Ob** | *Ex* | **Ob** | *Ex* |
| 35 | 0 | **34** | - | **33** | - |
| 70 | 0 | **40** | - | **48** | - |
| 140 | 0 | **52** | - | **64** | - |
| 280 | 0 | **61** | - | **83** | - |
| 0 | 35 | **8** | - | **9** | - |
| 0 | 70 | **12** | - | **9** | - |
| 0 | 140 | **57** | - | **41** | - |
| 0 | 280 | **66** | - | **51** | - |
| 35 | 35 | **48** | *39* | **60** | *39* |
| 70 | 70 | **60** | *47* | **72** | *53* |
| 140 | 140 | **87** | *79* | **88** | *79* |
| 280 | 280 | **95** | *87* | **96** | *92* |
| CHEAL = *Chenopodium album* (Common lambsquarters/fat hen)<br>GLY-RES = Glyphosate-resistant<br>Ob = observed<br>Ex = expected | | | | | |

## Claims

1.   A method of controlling undesirable vegetation which comprises contacting the vegetation or the locus thereof with or applying to the soil to prevent the emergence of vegetation an herbicidally effective amount of an herbicidal mixture comprising

   (a) a dicamba salt and
   (b) a glyphosate salt,

   wherein the undesirable vegetation comprises glyphosate resistant common lambsquarters, and the weight ratio of the dicamba salt to the glyphosate salt is between 2:1 and 1:2 on an acid equivalent basis.

2.   The method of claim 1, wherein the dicamba salt is dicamba dimethylamine or dicamba choline.

3.   The method of claim 1, wherein the glyphosate salt is glyphosate dimethylamine, glyphosate isopropylamine, or glyphosate potassium.

4.   The method of claim 1, wherein the weight ratio of the dicamba salt to the glyphosate salt is 1:1 on an acid equivalent basis.

**Patentansprüche**

1. Ein Verfahren zur Bekämpfung unerwünschter Vegetation, welches das In-Kontakt-Bringen der Vegetation oder des Ortes derselben mit einer herbizid wirksamen Menge einer herbiziden Mischung umfassend

   (a) ein Dicamba-Salz und
   (b) ein Glyphosat-Salz

   oder das Aufbringen derselben auf den Boden umfasst, um das Auftreten der Vegetation zu verhindern, wobei die unerwünschte Vegetation glyphosatresistenten Weißen Gänsefuß umfasst und das Gewichtsverhältnis des Dicamba-Salzes zu dem Glyphosat-Salz zwischen 2:1 und 1:2 auf einer Säureäquivalentbasis liegt.

2. Das Verfahren gemäß Anspruch 1, wobei das Dicamba-Salz Dimethylamin-Dicamba oder Cholin-Dicamba darstellt.

3. Das Verfahren gemäß Anspruch 1, wobei das Glyphosat-Salz Dimethylamin-Glyphosat, Isopropylamin-Glyphosat oder Kalium-Glyphosat darstellt.

4. Das Verfahren gemäß Anspruch 1, wobei das Gewichtsverhältnis des Dicamba-Salzes zu dem Glyphosat-Salz 1:1 auf einer Säureäquivalentbasis beträgt.

**Revendications**

1. Procédé de lutte contre des végétaux indésirables, qui comporte le fait de mettre en contact avec les végétaux ou avec l'endroit où ils poussent, ou d'appliquer sur le sol pour empêcher la levée des végétaux, en une quantité à effet herbicide, un mélange herbicide comprenant :

   a) un sel de dicamba,
   b) et un sel de glyphosate,

   étant entendu que les végétaux indésirables comprennent du chéno-pode blanc résistant au glyphosate, et que le rapport pondéral du sel de dicamba au sel de glyphosate, calculé en équivalents d'acides, vaut entre 2/1 et 1/2.

2. Procédé conforme à la revendication 1, dans lequel le sel de dicamba est un sel de diméthylamine et de dicamba, ou un sel de choline et de dicamba.

3. Procédé conforme à la revendication 1, dans lequel le sel de glyphosate est un sel de diméthylamine et de glyphosate, un sel d'isopropylamine et de glyphosate, ou un sel de potassium et de glyphosate.

4. Procédé conforme à la revendication 1, dans lequel le rapport pondéral du sel de dicamba au sel de glyphosate, calculé en équivalents d'acides, vaut 1/1.

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

## Patent documents cited in the description

- US 20080119361 A1

## Non-patent literature cited in the description

- Herbicide Handbook of the Weed Science Society of America. 2007, 429

- **COLBY, S.R.** Calculation of the synergistic and antagonistic response of herbicide combinations. *Weeds,* 1967, vol. 15, 20-22